# EUROPEAN PATENT SPECIFICATION

(11) **EP 0 329 759 B1**
(45) Date of publication and mention of the grant of the patent: **21.07.1993**
(21) Application number: 88907944.8
(22) Date of filing: 22.07.1988
(51) Int. Cl.: A47J 42/04

(54) **PEPPERMILL HAVING DISPOSABLE CARTRIDGE**
PFEFFERMÜHLE MIT WEGWERFPATRONE
MOULIN A POIVRE A CARTOUCHE JETABLE

(30) Priority: 24.08.1987 US 88254; 05.10.1987 US 104384
(43) Date of publication of application: 30.08.1989
(73) Proprietor: Poncy, George W., Singer Island Florida 33404 (US)
(72) Inventor: Poncy, George W., Singer Island Florida 33404 (US)
(74) Representative: Glaeser, Joachim, Dipl.-Ing.
(86) International application number: US8802840
(87) International publication number: WO8901753

(56) References cited:
- DE-B- 1 165 214
- US-A- 3 633 834
- US-A- 3 991 947

## Description

### Background of the Invention

The present invention relates to food grinding devices and, more particularly, to large peppermills of the type commonly used in restaurants.

In restaurants, it is customary for the waiter to dispense freshly ground pepper from a large peppermill on the order of 25 cm (10 inches) to as much as 60 cm (24 inches) long, which enables the waiter to center the working end of the peppermill over the center of the food to be seasoned, without reaching unduly over the food or over the patrons seated at a table. Conventional restaurant peppermills have several disadvantages. Peppermills which are in constant use require frequent refilling with peppercorn kernels, a chore which is disdained by waiters and busboys alike. Pouring the peppercorn kernels from a container into the comparatively narrow orifice provided in the peppermill often results in kernels being spilled onto the floor, which not only results in waste, but also requires cleanup. Furthermore, constant use of the peppermills results in clogging of the grinding surfaces in the peppermills, which impairs performance and requires disassembly of the peppermills for wire brushing and cleaning. Taking a peppermill apart and putting it back together again requires some skill, in addition to tools such as screwdrivers. Sometimes, both a Phillips type screw and a slotted screw are used by a peppermill manufacturer. In addition to all of the foregoing is the need to replace the entire peppermill because repeated use has deteriorated the grinding surfaces beyond use even though most of the peppermill is in good-as-new condition.

Faced with the foregoing obstacles, many restaurant proprietors end up with a number of peppermills which simply languish in the kitchen either worn out or in need of refilling or cleaning. Since they need operating peppermills, the proprietors often resort to the quick, though expensive, remedy of simply buying additional peppermills.

Although the problems described above pertain especially to the large peppermills used by waiters in restaurants, many of the same problems, such as the disassembly, filling, spilling and deterioration apply as well to smaller peppermills, such as those used in the home and those which might be provided on each table in a restaurant.

A food grinder is known (US-A-3,633,834) comprising:
a casing;
a cartridge mounted in said casing adapted to hold a supply of food to be ground and dispensed;
means for restricting movement of said cartridge relative to said casing;
means in said cartridge for grinding and dispensing the food;
and
means for operating said grinding means.

Furthermore a food grinder is known (DE-B-1,165 214) having a cartridge which is removable from a casing and having operating means which are removably connected to the grinding means.

### Summary of the Present Invention

In order to overcome the drawbacks of conventional peppermills, a peppermill is provided being characterzized by the features listed in the claims.
Fig. 1 is a cross section of the peppermill according to the present invention showing the cartridge within a plastic casing;
Fig. 2 is a top plan view of the connector member of Fig. 1;
Fig. 3 is a bottom plan view of the knob of Fig. 1;
Fig. 4 is a front elevation of the cartridge of Fig. 1;
Fig. 5 is a top plan view of the cartridge of Fig. 4;
Fig. 6 is a front elevation of the casing of Fig. 1;
Fig. 7 is a bottom plan view of the casing of Fig. 6;
Fig. 8 is a top plan view of the casing of Fig. 6;
Fig. 9 is a front elevation of an extension member for use in the peppermill according to the present invention;
Fig. 10 is a bottom plan view of the extension member of Fig. 9;
Fig. 11 is a top plan view of the extension member of Fig. 9;
Fig. 12 is an exploded view showing the extension member of Fig. 9 in connection with the peppermill;
Fig. 13 is a cross section of an alternate cartridge cap for use in the peppermill according to the present invention;
Fig. 14 is a view in elevation of a peppermill of the invention, shown in partial axial section, having a peppermill tree made of wood;
Fig. 15 is a bottom plan view of the peppermill of Fig. 14;
Fig. 16 is a view in elevation of the disposable cartridge employed in the peppermill of Fig. 14;
Fig. 17 is a cross sectional view of the peppermill of the invention taken along the line 17-17 of Fig. 14;
Fig. 18 is a top plan view of the adaptor employed to connect a handle portion of the peppermill to the rotary portion of the disposable cartridge employed in the peppermill of Fig. 14;
Fig. 19 is a cross sectional view of the peppermill taken along lines 19-19 of Fig. 14;
Fig. 20 is an elevational view of the lower wooden part of the outer casing of the peppermill shown in Fig. 14; and
Fig. 21 is a top plan view of the part shown in Fig. 20.

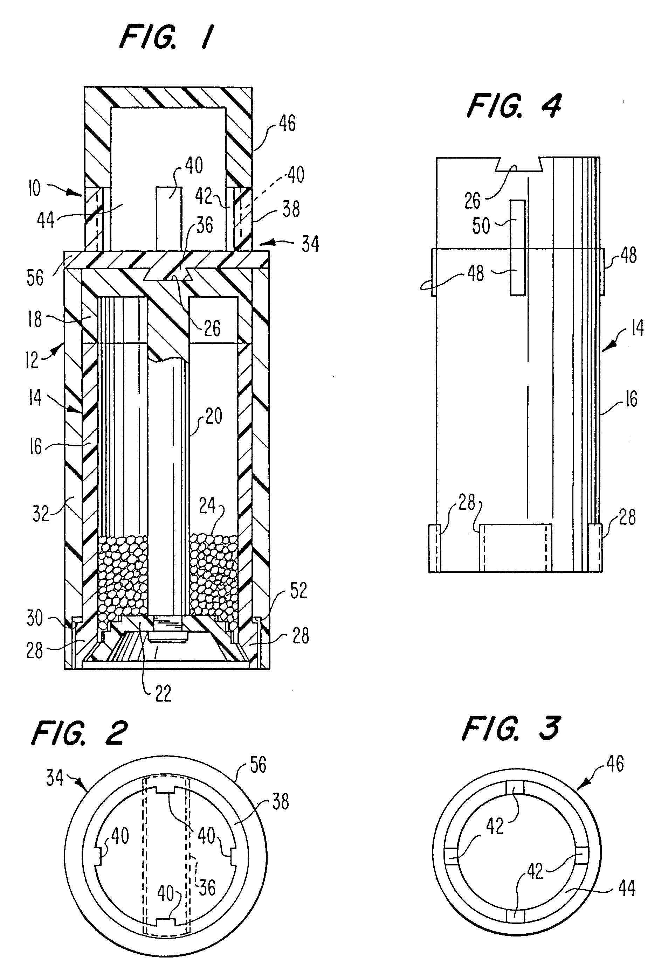

As can be seen from Fig. 1, the peppermill according to the present invention, which is designated generally by the reference numeral 10, includes a casing 12, or peppermill tree, which is designed to be kept and reused and a cartridge 14, which is disposable. Both the casing 12 and the cartridge 14 are cylindrical in shape, and the cartridge 14 includes a tubular body 16 having open ends and grinding surfaces on the interior of the body 16 at one of the ends. Although the casing 12 described and shown herein is generally cylindrical, a wide variety of designs and configurations are possible, especially when the casing 12 is made from an acrylic resin, such as LUCITE. Of course, the casing can also be made in a more traditional style, using fine woods with appropriate finishes. Because of the need for rigid grinding surfaces, the cartridge 14 is best made from a tough plastic resin, such as a polycarbonate. A cap 18 is positioned at one end of the body 16 for rotation relative to the body and includes a depending shaft 20 connected to a grinding element 22 which closes the end of the body 16 having the grinding surfaces so that a supply of peppercorns 24 can be retained in the cartridge 14. Rotation of the cap 18 relative to the body 16 causes rotation of the grinding element 22 relative to the grinding surfaces on the body 16 so that the peppercorns 24 can be ground and pepper can be dispensed.

An open-ended groove 26, dovetail-shaped in cross section and having a bottom and an open top, is defined in the cap 18 across a top surface thereof. A plurality of legs or lugs 28 project radially from the end of the cartridge body 16 having the grinding surfaces. The lugs 28 are received in blind slots 30, which are defined at one end of a hollow cylindrical body or trunk 32 of the casing 12. As can best be seen from Fig. 1, the height of the blind slots 30 is slightly greater than the height of the radially extending lugs 28, for reasons which will be described later. The opposite end of the trunk 32 is surmounted by a connector member 34 having a depending bar 36 or ridge of dovetail-shaped cross section which mates with the dovetail groove 26 of the cap 18 of the cartridge 14. The dovetail groove 26 is slightly wider than the dovetail bar 36, for example, 16mm (.625 inches) for the groove compared to 13mm (.500 inches) for the bar. The connector member 34 includes an upstanding rim 38 defining a plurality of internal axial ribs 40. The ribs 40 are received in slots 42 formed in a skirt 44 depending from a knob 46, which provides a surface suitable for grasping to rotate the cartridge cap 18 relative to the cartridge body 16. The interengagement of the ribs 40 with the slots 42 causes the connector member 34 to move with the knob 46 when the knob is rotated. The interengaging portions of the connector member 34 and the knob 46 are also illustrated in Figs. 2 and 3.

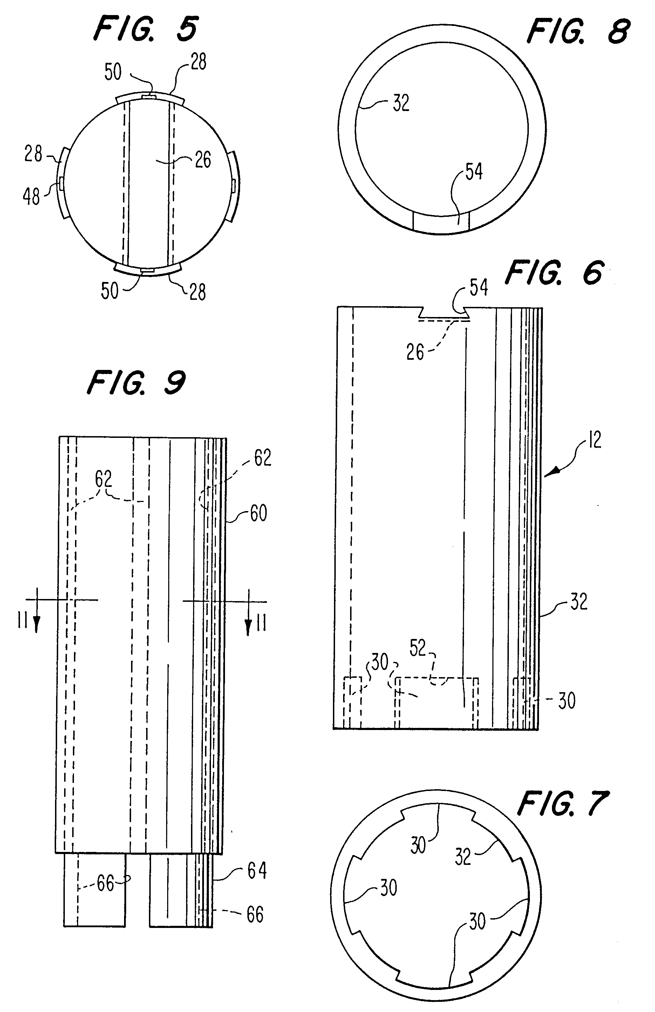

As can best be seen from Figs. 4 and 5, four of the radially projecting lugs 28 are evenly spaced around an exterior surface at one end of the body 16 of the cartridge 14, each lug 28 having a width just slightly less than the width of a blind slot 30, so that the cartridge body 16 is prevented from rotating relative to the trunk 32. A corresponding number of index ridges 48 are provided at the opposite end of the cartridge body 16 and are centered in alignment with the lugs 28. The index ridges 48 are flat, having a thickness on the order of at about 0,08 mm (.003 inches). A pair of diametrically opposed index ridges 50 are provided on an exterior surface of the cap 18 of the cartridge 14 in vertical alignment with the ends of the dovetail groove 26. Therefore, when the index ridges 50 on the cap 18 are aligned with any two of the index ridges 48 on the cartridge body 16, the ends of the open ended dovetail groove 26 are in alignment with two of the radially projecting lugs 28, which is important for the assembly of the peppermill, as will be described hereinafter.

The trunk 32 of the casing 12 is open at opposite ends and is sized to receive the cartridge 14. For example, the inner diameter of the casing 12 can be on the order of 0,25 mm (.010 inches) larger than the outer diameter of the cartridge 14. The blind slots 30 are defined in the wall of the trunk 32 in an interior surface thereof, each blind slot 30 having an open end opening at the bottom end of the trunk 32 and a closed, or blind, end defined by a shoulder 52 positioned a predetermined distance above the bottom end of the trunk 32. As can be seen from Fig. 6, a notch 54 extends through the rim of the trunk 32 at the top end of the trunk 32 and is wide enough that the dovetail bar 36 of the connector member 34 can be slid through. In the normal, assembled condition of the peppermill, a bottom surface of the notch 54 is at a level slightly above the bottom surface of the dovetail groove 26, the position of which is shown in dashed lines in Fig. 6, thereby obstructing the groove and preventing access to the groove by the dovetail bar 36. Thus, the upper portion of the trunk 32, including the notch 54, releasably locks the dovetail bar 36 in the dovetail groove 26 after the dovetail bar has been slid into the dovetail groove. In order to permit the dovetail bar 36 to be moved into the dovetail groove 26, the cartridge 14 must be raised relative to the casing 12 to the point where the bottom surface of the notch 54 is flush with the bottom of the dovetail groove 26. In this position, the dovetail bar 36 can be inserted all the way into the dovetail groove 26 until the bar hits the opposite side of the casing 12, where there is no notch in the rim of the casing. In order to permit such raising, the position of the shoulders 52 in the blind slots 30, that is, the height of the blind slots 30 above the bottom end of the casing 12 is sufficiently greater than the height of the radially extending lugs 28 to permit the cartridge 14 to be raised enough so that the bottom surface of the notch 54 in the trunk 32 no longer prevents the entry of the dovetail bar 36 into the dovetail groove 26. Thus, the difference in height defines a clearance between the closed end of the slots 30 and adjacent surfaces of the radially projecting lugs 28, thereby permitting limited movement of the bottom of the notch 54 relative to the dovetail groove 26. When the cartridge 14 is permitted to descend to its normal, operative position, after the dovetail bar 36 has been inserted into the dovetail groove 26, the bottom surface of the notch 54 again obstructs the dovetail groove 26, thereby preventing the separation of the connector member 34 from the cap 18 of the cartridge 14.

Alignment of the dovetail groove 26 with the notch 54 in the top of the trunk 32 is ensured when the index ridges 50 on the cartridge cap 18 align with any two of the index ridges 48 on the cartridge body 16, since the dovetail groove 26 is aligned with the index ridges 50 on the cartridge cap 18, since each index ridge 48 on the cartridge body 16 is centered over a radially extending leg 28, and since the radially projecting lugs 28 are received in the blind slots 30, one of which is aligned with the notch 54 at the opposite end of the trunk 32. As can be appreciated from Figs. 1, 5 and 7, the reception of the radially projecting lugs 28 in the blind slots 30 prevents rotation of the cartridge 14 relative to the trunk 32 and assures that the grinding element 22 rotates relative to the cartridge body 16 when the connector member 54 rotates relative to the trunk 32. In the assembled condition of the peppermill 10, the cartridge 14 is prevented from being lifted out of the casing by the engagement of the radially projecting lugs 28 on the cartridge 14 with the shoulders 52 at the closed ends of the blind slots 30 in the casing 12. In addition, the cartridge 14 can only be pushed down until the bottom of the cartridge 14 is in the same plane as the bottom of the casing 12. At that point, a flange 56 (Fig. 1) on the connector member 34 engages the top rim of the casing 12. When the flange 56 is in engagement with the top rim, the bottom surface of the dovetail bar 36 is below the bottom surface of the notch 54 in the rim, and movement of the dovetail bar 36 along its axis is prevented.

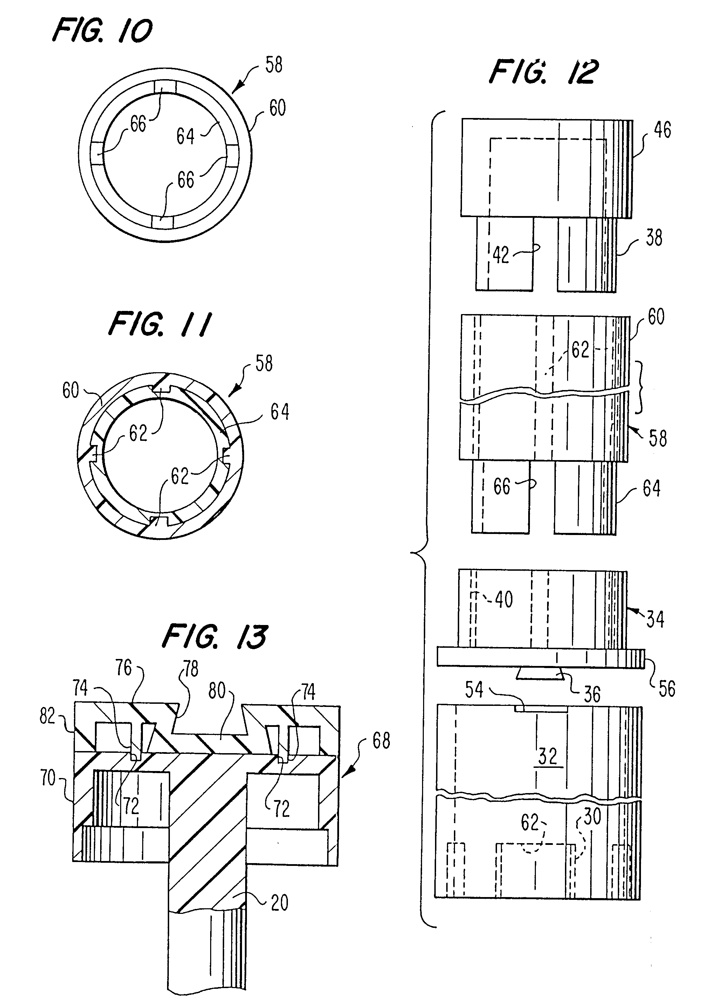

The peppermill 10 described thus far and illustrated in Figs. 1-8 is especially well suited for the relatively small sizes of peppermills common in domestic use and for placement on restaurant tables. However, the peppermill 10, according to the present invention , can be made longer for commercial or restaurant use and especially for use by a waiter by inserting an extension member 58, which can be seen from Figs. 9-11. The extension member 58 includes a cylindrical trunk portion 60 having the same diameter as the upstanding rim 38 on the connector member 34 and a height equal to the desired increase in length of the peppermill 10. Internal axial ribs 62 corresponding to the internal axial ribs 40 on the upstanding rim 38 are provided so that they may interengage with the slots 42 on the depending skirt 44 of the knob 46. The extension member 58 includes its own skirt 64 which corresponds in shape and dimension to the skirt 44 of the knob 46, including slots 66 which receive the internal axial ribs 40 of the upstanding rim 38 on the connector member 34. As can best be seen from Fig. 12, the interengagement of the extension member 58 at one end with the upstanding rim 38 of the connector member 34 and at the other end with the depending skirt 44 of the knob 46 permits the length of the peppermill 10 to be increased while maintaining operational engagement between the knob 46 and the connector member 34, whereby the cartridge 14 may be operated and freshly ground pepper dispensed. Because of the configurations and dimensions of the trunk portion 60 and the skirt 64, a plurality of extension members 58 can be stacked on one another to extend the length of the peppermill 10, instead of employing a single extension member.

In the embodiment depicted in Fig. 1, the cap 18 of the cartridge 14 is illustrated as a single piece in which a dovetail groove is formed. As an alternative, which is illustrated in Fig. 13, a cartridge cap 68 may be employed which includes a cylindrical base element 70 having an upper surface which is planar except for a pair of parallel grooves 72 which are formed chordally in the upper surface. The grooves 72 receive depending prongs 74 of an adaptor member 76 which has defined therein an open ended slot 78 of dovetail cross section for receiving the dovetail bar 36 of the connector member 34. The adaptor member 76 includes a central portion 80 which defines the open ended slot and a depending flange 82 which is flush with a bottom surface of the central portion. The prongs 74 project below the bottom surface of the central portion 80 and the flange 82 so as to extend into the parallel grooves 72 when the bottom surface and the flange contact the planar upper surface of the base element 70. The prongs 74 are permanently cemented in place in the grooves 72.

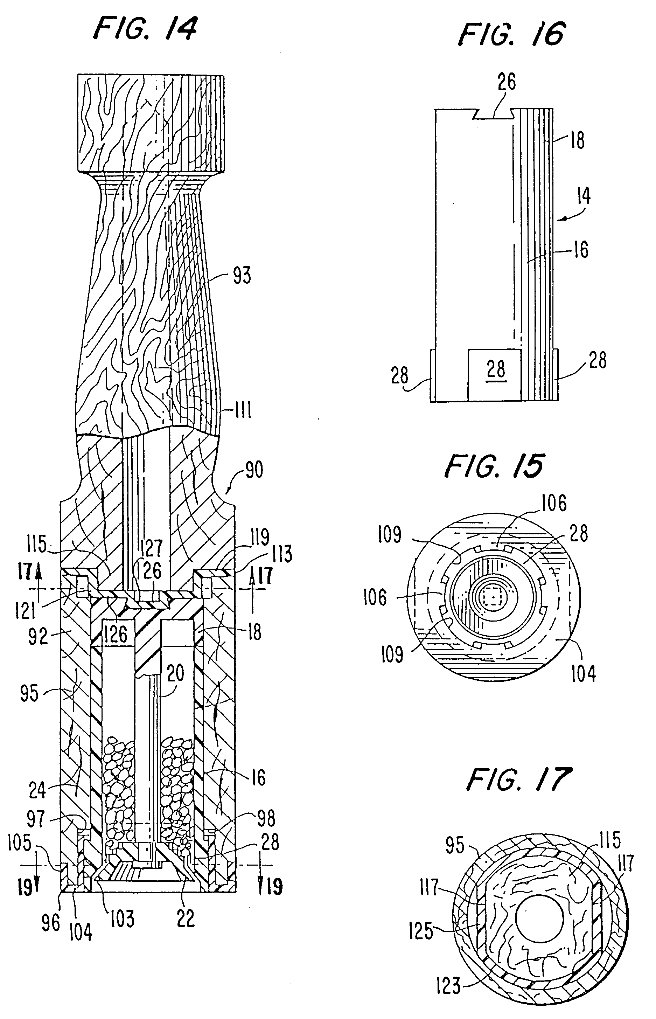

As shown in Fig. 14, the peppermill of the present invention which is made of wood comprises a peppermill tree 90, and the disposable cartridge 14, which serves to contain peppercorns to be ground as well as to grind the peppercorns and dispense the ground pepper from the peppermill. As can be seen from Fig. 16, the index ridges 48 and 50, which were on the body 16 and cap 18, respectively, of the cartridge 14 in Fig. 4, have been omitted from the cartridge 14 as shown in Fig. 16, although they could be provided if desired. In all other respects, the two cartridges are the same.

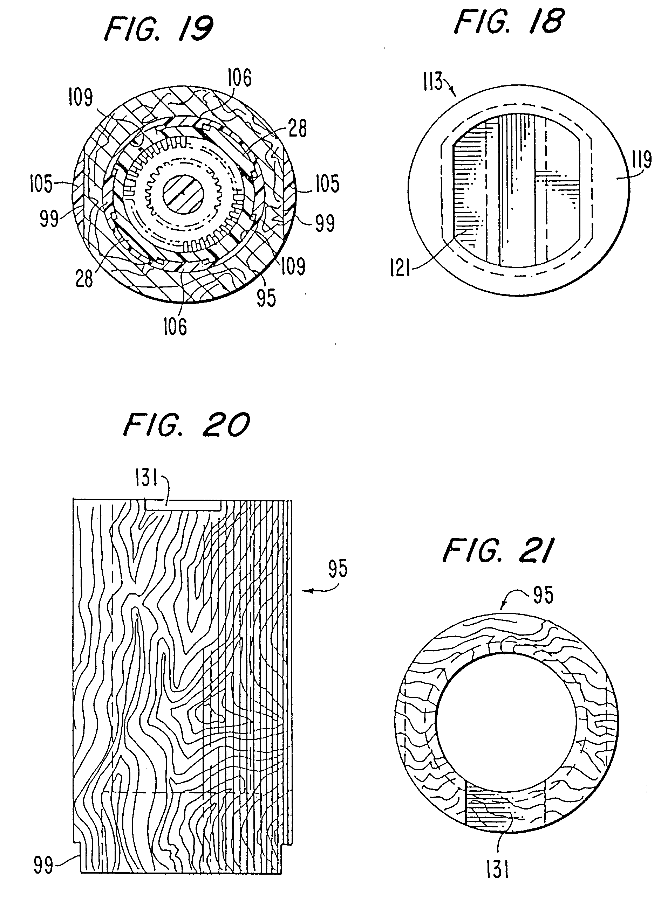

The peppermill tree has a lower trunk 92 as shown in Fig. 14 made primarily of wood and upper stem 93 also made primarily of wood. The lower trunk 92 is in the form of a hollow cylinder having open ends. The trunk 92 comprises a wooden cylindrical tubular body 95 and an adaptor 96 fitted on the lower end of the body 95. The wooden body 95 has a section 97 at the lower end with an enlarged internal diameter, which defines an internal shoulder 98. In addition, flats 99 are formed on diametrically opposite sides of the outside surface of the lower end of the cylindrical body 95. The adaptor 96 is made of a hard plastic, such as polycarbonate, and fits within the lower end of the cylindrical body 95. The adaptor 96 comprises an inner cylindrical tubular section 103 which fits with the enlarged diameter section 97 of the body 95 and a radial section 104 which abuts against the lower axial end surface of the body 95. On the outer edges of the radial section 104 are upstanding legs 105 which fit into the flats 99. As best shown in Fig. 19, the outer radial surfaces of the legs 105 are cylindrical and form a continuation of the outer cylindrical surface of the body 95.

The inner cylindrical surface of the tubular section 103 is provided with ribs 106 extending axially inward and positioned at 90 degree intervals. Each rib 106 extends over an angle of about 30 degrees. The inner surfaces of the ribs 107 are cylindrical and form a continuation of the inner cylindrical surface of the upper portion of the body 95. The spaces between the ribs 106 define blind slots 109 in the bottom of the trunk 92. The blind slots extend up to the shoulder 98 defined by the upper end of the enlarged diameter section 97. These blind slots each extend over angles of 60 degrees and are distributed at 90 degree intervals. The blind slots 109 receive the radially extending lugs 28 on the cartridge body when the cartridge is inserted into the trunk 92, and prevent the cartridge from rotating relative to the trunk 92. The lugs 28 extend over angles of 45 degrees so they fit loosely within the blind slots 109 to facilitate insertion of the cartridge into the trunk 32. The stem 93 comprises a wooden handle portion 111 and an adaptor 113 at the lower end of the stem. The handle portion 111 has a reduced diameter cylindrical extension 115 which has flats 117 formed on the opposite cylindrical sides thereof as shown in Fig. 17. The adaptor 113 has a radial outer section 119 which abuts against a lower radial end face of the handle portion 111, as shown in Figs. 14 and 18, and a center section 121 which is shaped to fit over the cylindrical wooden extension 115 and cover the lower surface of the extension 115, as shown in Figs. 14 and 17. The center section 121 has cylindrical sidewalls 123 with flats 125 to correspond in shape to the extension 115 of the handle portion 111 and it also has a radial wall 126 covering the bottom of the extension 115. The cylindrical walls 123 of the center section are sized to and fit within the upper end of the cylindrical bore in the trunk 92. Extending across the radial bottom wall 126 of the center section 121 of the adaptor 113 is a dovetail-shaped downwardly projection bar 127, which is shaped to fit within the dovetail-shaped groove 26 in the cap of the cartridge.

At the top of the trunk 92, a cut out 131 is provided extending through the wall of the trunk to the cylindrical bore of the trunk as shown in Figs. 20 and 21. The cut out 131, which has vertical sidewalls, is sized to be a little larger than the width of the bar 127 so that the bar 127 will fit through the cut out 131.

To assemble the cartridge into the peppermill tree, the cartridge is inserted into the bottom of the trunk 92 with the lugs 28 of the cartridge sliding into the slots 109 defined between the ribs 106 in the adaptor 96. The cartridge is pushed upwardly as far as it will go in the trunk so that the lugs 28 are pushed against the shoulder 98. When the cartridge has been moved upwardly to this extent within the trunk 92, the dovetailed groove 26 within the cap 18 will be fully exposed by the cut out 131; that is, the bottom of the dovetailed groove 26 will be above the bottom surface of the cut out 131. This arrangement allows the dovetailed bar 127 formed on the adaptor 113 on the bottom of the stem 93 to be inserted into the groove 26 through the cut out 131, thus completing the assembly of the cartridge in the peppermill tree. By virtue of the dovetailed bar 127 being in the dovetailed groove 26, when the stem 93 is turned on its axis relative to the trunk 92, the cap 18, the axle 20, and the grinding element 22 will be rotated within the body 16 of the cartridge and, thus, effect grinding of the peppercorns and dispensing of the ground pepper from the cartridge. As the cap and grinding element are turned, the lugs 28 in the slots 108 prevent the cartridge body from turning with the cap and grinding element.

In the normal operating position, the cartridge 14 will be positioned so that the bottom of the trunk 92 and the downwardly facing radial surface of the radial section 119 of the adaptor 113 will be in engagement with the top planar surface of the body 95. The normal tendency to exert downward pressure on the stem 93 during the grinding operation will tend to maintain the cartridge in this position. In this operating position, the slot 26 in the cap 18 of the cartridge will be below the cut out 131 so that the stem 93 cannot be easily removed from the cartridge without prior knowledge of how to effect this removal and the cartridge cannot be easily removed from the tree. This structure is to hinder theft of the cartridge when the peppermill tree is being used in a restaurant or in other similar applications.

The above-described wooden peppermill tree and cartridge combination of the present invention operates mechanically similar to the plastic embodiment of the peppermill tree described earlier. The peppermill tree of the wooden embodiment differs from that of the plastic embodiments in that the wooden peppermill tree is largely made of wood facilitating of the manufacture of different sizes and shapes of the peppermill tree as well as improving the design appearance of the peppermill tree. The plastic adaptors in combination with the wooden components of the peppermill tree make it possible to manufacture the wooden components of the peppermill tree with simple wood forming steps, reducing the incidence of splitting and cracking of the wooden components and thus reducing the amount of waste in the manufacturing process.

As indicated above, the invention is primarily for the purpose of facilitating making the peppermill tree largely out of wood. However, it will be appreciated that the concept of using adaptors in combination with the body 95 or the stem handle portion 111 is also applicable to having the trunk body 95 or handle portion 111 made of other materials. For example, to reduce the cost of the peppermill tree or provide a design variation in the peppermill tree, it may be desirable to make the trunk body 95 or the stem portion 111 out of a paperboard product or other material which presents problems in forming the blind slots 109 in the trunk 92 or the bar 127 on the stem 93, or which is not strong enough to coact with the lugs 28 or the groove 26 of the peppermill cartridge. The use of the adaptors on the trunk and the stem permits the material from which the peppermill tree is made to be selected from a wide range of different materials.

Although the term "peppermill" has been used throughout in connection with the device according to the present invention, and the invention has its widest application as a peppermill, it is understood that other foodstuffs, such as salt, nuts and hard cheeses, such as parmesan, can be ground in and dispensed from the device according to the present invention.

## Claims

1. A food grinder comprising:
a casing (12, 92);
a cartridge (14) mounted in said casing, said cartridge being adapted to hold a supply of food (24) to be ground and dispensed;
means for restricting movement of said cartridge relative to said casing;
elements (22) in said cartridge for grinding the food;
and means (46, 93) for operating said grinding elements, characterised in that
said cartridge (14) is disposable and removable from said casing (12),
said cartridge (14) includes a body (16) and a cap (18) rotatably mounted relative to said body (16) and operatively connected to said grinding elements (22) by means of shaft (20),
and said operating means (46, 93) is removably connected to said grinding elements (22) by means of a groove (26) defined in the cap (18) of said cartridge (14), and a bar (36) depending from a stem of said operating means (46, 93), and housed in the groove (26).

2. A food grinder as recited in claim 1, wherein said groove (26) has a bottom, an open top, at least one open end, and sides which converge from said bottom to said top, and said bar (36) has diverging sides complementary to the converging sides of the groove (26), whereby said bar can be slid into said groove and held fixed against movement relative to said cap (18) of said cartridge (14) in a direction transverse to the direction of sliding.

3. A food grinder as recited in claim 2, wherein said groove (26) and said bar (36) have in cross section the shape of a dovetail.

4. A food grinder as recited in claim 2, further characterzied by means for locking said bar (36) in said groove (26).

5. A food grinder as recited in claim 2, wherein a portion of said casing (12), i.e. the bottom surface of a notch (54), obstructs the open end of said groove (26).

6. A food grinder as recited in claim 5, wherein said notch (54) is located in a rim on an end of said casing (12) adjacent to said cap (18) of said cartridge (14), said notch (54) including a bottom having a width greater than the width of said bar (36), and means for permitting limited movement of the bottom of said notch (54) relative to said groove (26) between a first position, in which the bottom of said notch is above the bottom of said groove, and a second position, in which the bottom of said notch is flush with the bottom of said groove.

7. A food grinder as recited in claim 5, wherein a slot (30) is located in said casing at an end of said casing distal to said cap (18) of said cartridge (14), said slot (30) having an open end at said casing end of said body (16) and a closed end opposite to said open end, and at least one element (28) projecting radially from said body (16) and positioned in said slot (30), and said means for permitting limited movement comprises clearance between the closed end of said slot (30) and an adjacent surface of said radially projecting element (28).

8. A food grinder as recited in claim 7, wherein said notch is in alignment with said slot in said casing body in an axial direction with respect to said casing body, said food grinder further comprising a first index mark on the body (16) of said cartridge (14) at an end of the body (16) adjacent to the cap (18) of said cartridge, said index mark being in alignment with said radially projecting element in an axial direction with respect to said cartridge, and a second index mark on the cap (18) of said cartridge in alignment with an open end of said groove (26) in an axial direction with respect to said cartridge, whereby alignment of said first index mark with said second index mark results in registration of the open end of said groove (26) with said notch (54).

9. A food grinder as recited in claim 1, further comprising a knob (46) connected to said bar (36).

10. A food grinder as recited in claim 9, wherein said stem includes an upstanding rim (38) and at least one rib (40) defined axially on said upstanding rim, and said knob (46) includes a depending skirt (44) defining at least one slot (42), the rib (40) on said upstanding rim (38) being positioned in the slot (42) on said depending skirt (44), whereby said bar (36) rotates when said knob (46) is rotated.

11. A food grinder as recited in claim 9, further comprising an elongate extension member (58) positioned between said bar (36) and said knob (46).

12. A food grinder as recited in claim 10, further comprising an elongate extension member (58) positioned between said bar (36) and said knob (46), said extension member having a depending skirt (64) defining at least one slot (66) engaging the rib (40) on said upstanding rim (38), said extension member also having a rim and at least one rib (62) defined axially on said rim of said extension member and engaged with the slot on the depending skirt (44) of the knob (46), whereby said bar (36) rotates when said knob (46) is rotated.

13. A food grinder as recited in claim 1, wherein said cap (18) of said cartridge (14) includes a base element (70) having a surface and at least one groove (72) defined in said surface, and an adaptor member (76) mounted on said base element (70) and having at least one prong (74) projecting into said groove (72) of said base element (70), said adaptor member (76) further including a groove or slot (78) defined in a surface on a side of said adaptor member opposite to said prong (78), and said stem includes a depending bar (36), said bar being positioned in the groove of said adaptor member.

14. A food grinder as recited in claim 1, wherein:
said casing comprises a tubular body (95) surrounding said cartridge and a handle section (90), rotatable with respect to said tubular body (95), said cartridge and said handle section having means to connect said handle section to a rotatable member to rotate said rotatable member with said handle section relative to said tubular section;
a first adaptor (113) is made of material different from that of said tubular body (95) and is mounted in one end of said tubular body (95), said first adaptor (113) defining slots (117) in one end of said tubular body (95); and
the container for containing food to be ground has lugs disposed in said slots to prevent rotation of said container relative to said tubular section.

15. A food grinder as recited in claim 14, wherein said adaptor (113) is made of plastic and said tubular body (95) is made out of wood.

16. A food grinder as recited in claim 14, wherein said handle section (90) comprises a major portion (93) and a second adaptor (96) on said major portion made of a different material than said major portion, said second adaptor (96) and said rotatable member (20) having means to couple said rotatable member for rotation with said handle section (90) relative to said tubular section (95).

17. A food grinder as recited in claim 16, wherein said first adaptor (113) and said second adaptor (96) are made of plastic, and said tubular section (95) and said major portion (93) are made out of wood.

18. A food grinder as recited in claim 16, wherein said coupling means comprises (1) a cap (18) on said cartridge connected to said rotatable member (20) for rotation therewith, (2) said second adaptor (113), (3) means defining a recess in one of said cap (18) and said second adaptor (96), and (4) means defining a projection (127) on the other end of said cap (18) and said second adaptor (113) received in said recess.

19. A food grinder as recited in claim 18, wherein said recess comprises a groove, and said projection (127) comprises a bar which can move in said groove (26) only by sliding longitudinally in said groove.

20. A food grinder as recited in claim 19, wherein said groove (26) and said bar (127) are dovetailed in shape.

21. A food grinder as recited in claim 1, wherein:
said casing comprises a tubular section (95) surrounding said cartridge (14) and a handle section (90) rotatable with respect to said tubular section;
said handle section (90) has a major portion (93) and an adaptor (113) mounted on said major portion, said adaptor being made of a different material than said major portion;
said adaptor (113) and said rotatable member (20) have means to couple said rotatable member to said handle section (90) for rotation therewith.

22. A food grinder as recited in claim 21, wherein said adaptor (113) is made of plastic and said major portion (93) is made of wood.

23. A food grinder as recited in claim 21, wherein said coupling means comprises said adaptor (113), a cap (18) connected for rotation with said rotatable member (201), means (26,127) defining a recess (26) in one of said cap and said adaptor, and a projection (127) formed on the other of said cap and adaptor fitting within said recess.

24. A food grinder as recited in claim 23, wherein said recess comprises a groove (26) and said projection comprises a bar (127), said groove and said bar being shaped so that said bar is movable in said groove only by sliding longitudinally in said groove.

25. A food grinder as recited in claim 24, wherein said groove (26) and said bar (127) are dovetailed in shape.

## Patentansprüche

1. Lebensmittelmühle, aufweisend:
ein Gehäuse (12,92);
eine in diesem Gehäuse angebrachte Patrone (14), die eine bestimmte Menge an Lebensmitteln (24) aufnehmen kann, die gemahlen und abgegeben werden sollen;
eine Vorrichtung, um die Beweglichkeit der Patrone relativ zum Gehäuse einzuschränken;
Elemente (22) in der Patrone zum Mahlen der Lebensmittel;
und Vorrichtungen (46, 93) zur Betätigung der Mahlelemente, dadurch gekennzeichnet, daß
die Patrone (14) wegwerfbar und dem Gehäuse (12) entnehmbar ist,
die Patrone (14) einen Körper (16) und eine Kappe (18) aufweist, die in bezug auf den Körper (16) drehbar angebracht ist und vermittels einer Welle (20) arbeitsmäßig mit den Mahlelementen (22) verbunden ist, und daß
die Betätigungsvorrichtungen (46, 93) vermittels einer in der Kappe (18) der Patrone (14) festgelegten Vertiefung (26) und vermittels eines Steges (36) abnehmbar mit den Mahlelementen (22) verbunden sind, der von einem Fußteil den Betätigungsvorrichtungen (46, 93) nach unten vorsteht und in der Vertiefung (26) eingeschlossen ist.

2. Lebensmittelmühle nach Anspruch 1, dadurch gekennzeichnet, daß die Vertiefung (26) eine Unterseite, eine offene Oberseite, mindestens ein offenes Ende und von unten nach oben konvergierende Seiten hat, und daß der Steg (36) divergierende Seiten aufweist, die zu den konvergierenden Seiten der Vertiefung (26) komplementär sind, wobei der Steg in die Vertiefung geschoben und gegenüber der Kappe (18) der Patrone (14) quer zur Schieberichtung festgehalten werden kann.

3. Lebensmittelmühle nach Anspruch 2, dadurch gekennzeichnet, daß die Vertiefung (26) und der Steg (36) im Querschnitt schwalbenschwanzförmig sind.

4. Lebensmittelmühle nach Anspruch 2, außerdem gekennzeichnet durch eine Vorrichtung zum Verriegeln des Steges (36) in der Vertiefung (26).

5. Lebensmittelmühle nach Anspruch 2, dadurch gekennzeichnet, daß ein Teil des Gehäuses (12), d.h. die Unterseite einer Nut (54), das offene Ende der Vertiefung (26) versperrt.

6. Lebensmittelmühle nach Anspruch 5, dadurch gekennzeichnet, daß die Nut (54) sich in einem Rand an einem Ende des Gehäuses (12), angrenzend an die Kappe (18) der Patrone (14), befindet, wobei die Unterseite der Nut (54) breiter ist als der Steg (36), und daß eine Vorrichtung vorgesehen ist, die begrenzte Beweglichkeit der Unterseite der Nut (54) relativ zur Vertiefung (26) zwischen einer ersten Position, in der sich die Unterseite der Nut über dem Boden der Vertiefung befindet, und einer zweiten Position erlaubt, in der die Unterseite der Nut an der Unterseite der Vertiefung anliegt.

7. Lebensmittelmühle nach Anspruch 5, dadurch gekennzeichnet, daß sich an einem Ende des Gehäuses gegenüber von der Kappe (18) der Patrone (14) im Gehäuse ein Schlitz (30) befindet, der ein offenes Ende an diesem Gehäuseende des Körpers (16) und ein geschlossenes Ende gegenüber vom offenen Ende und mindestens ein Element (28) aufweist, das radial vom Körper (16) vorsteht und im Schlitz (30) angeordnet ist, und daß die Vorrichtung, die eine begrenzte Beweglichkeit erlaubt, einen Abstand zwischen dem geschlossenen Ende des Schlitzes (30) und einer benachbarten Oberfläche des radial vorstehenden Elementes (28) einhält.

8. Lebensmittelmühle nach Anspruch 7, dadurch gekennzeichnet, daß die Nut zu dem Schlitz im Gehäusekörper in axialer Richtung gegenüber dem Gehäusekörper ausgerichtet ist; die Lebensmittelmühle außerdem eine erste Anzeigemarke an dem Körper (16) der Patrone (14) an einem Ende des Körpers (16), angrenzend an die Kappe (18) der Patrone, aufweist; die Anzeigemarke auf das radial vorstehende Element in axialer Richtung gegenüber der Patrone ausgerichtet ist, und daß eine zweite Anzeigemarke auf der Kappe (18) der Patrone angeordnet ist, die zu dem offenen Ende der Vertiefung (26) in axialer Richtung gegenüber der Patrone ausgerichtet ist, wobei die Ausrichtung der ersten Anzeigemarke auf die zweite Anzeigemarke zur Justierung des offenen Endes der Vertiefung (26) mit der Nut (54) führt.

9. Lebensmittelmühle nach Anspruch 1, weiterhin gekennzeichnet durch einen Knauf (46), der mit dem Steg (36) verbunden ist.

10. Lebensmittelmühle nach Anspruch 9, dadurch gekennzeichnet, daß der Steg einen nach oben vorstehenden Rand (38) und mindestens eine Rippe (40) aufweist, die an dem nach oben vorstehenden Rand in axialer Richtung festgelegt ist, und daß der Knauf (46) eine nach unten ragende Schürze (44) aufweist, die mindestens einen Schlitz (42) definiert, wobei die Rippe (40) an dem nach oben vorstehenden Rand (38) im Schlitz (42) der nach unten ragenden Schürze (44) angeordnet ist, und wobei der Steg (36) sich dreht, wenn der Knauf (46) sich dreht.

11. Lebensmittelmühle nach Anspruch 9, außerdem gekennzeichnet durch einen länglichen Verlängerungsteil (58), der sich zwischen dem Steg (36) und dem Knauf (46) befindet.

12. Lebensmittelmühle nach Anspruch 10, außerdem gekennzeichnet durch einen länglichen Verlängerungsteil (58), der sich zwischen dem Steg (36) und dem Knauf (46) befindet, der eine nach unten ragende Schürze (64) aufweist, die mindestens einen Schlitz (66) definiert, der in die Rippe (40) an dem nach oben vorstehenden Rand (38) greift, wobei das längliche Verlängerungsteil ebenfalls einen nach oben vorstehenden Rand und mindestens eine Rippe (62) aufweist, die an dem nach oben vorstehenden Rand des Verlängerungsteils in axialer Richtung festgelegt ist und in den Schlitz der nach unten ragenden Schürze (44) des Knaufes (46) greift, wobei der Steg (36) sich dreht, wenn der Knauf sich dreht.

13. Lebensmittelmühle nach Anspruch 1, dadurch gekennzeichnet, daß die Kappe (18) der Patrone (14) ein Basiselement (70) mit einer Oberfläche, in der mindestens eine Vertiefung (72) definiert ist, und einen Adapter (76) aufweist, der an dem Basiselement (70) angebracht ist und mindestens einen Zapfen (74) aufweist, der in die Vertiefung (72) des Basiselements (70) ragt; der Adapter (76) außerdem in einer Oberfläche auf einer Seite das Adapters gegenüber vom Zapfen (74) eine Vertiefung oder einen Schlitz (78) aufweist, und daß der Fußteil der Betätigungsvorrichtung einen sich nach unten erstreckenden Steg (36) aufweist, der in der Vertiefung des Adapters angeordnet ist.

14. Lebensmittelmühle nach Anspruch 1, dadurch gekennzeichnet, daß:
das Gehäuse einen röhrenförmigen Körper (95), der die Patrone umgibt, und einen Griffbereich (90) aufweist, der in bezug auf den röhrenförmigen Körper (95) drehbar ist, wobei die Patrone und der Griffbereich Vorrichtungen besitzen, um den Griffbereich mit einem drehbaren Bauteil zu verbinden, um das drehbare Bauteil mit dem Griffbereich in bezug auf den röhrenförmigen Körper zu drehen;
ein erster Adapter (113), bestehend aus anderem Material als der röhrenförmige Körper (95), an einem Ende des röhrenförmigen Körpers (95) angebracht ist, wobei der erste Adapter (113) Schlitze (117) an einem Ende des röhrenförmigen Körpers (95) definiert; und
der Behälter für die zu mahlenden Lebensmittel Stifte aufweist, die in den Schlitzen angeordnet sind, um zu verhindern, daß sich der Behälter in bezug auf den röhrenförmigen Körper dreht.

15. Lebensmittelmühle nach Anspruch 14, dadurch gekennzeichnet, daß der Adapter (113) aus Kunststoff und der röhrenförmige Körper (95) aus Holz besteht.

16. Lebensmittelmühle nach Anspruch 14, dadurch gekennzeichnet, daß der Griffbereich (90) einen größeren Hauptteil (93) und auf diesem Hauptteil einen zweiten Adapter (96) aufweist, der aus einem anderen Material besteht als der Hauptteil, wobei der zweite Adapter (96) und das drehbare Bauteil (20) Vorrichtungen aufweisen, um das drehbare Bauteil mit dem Griffbereich (90) zu verbinden, um es in bezug auf den röhrenförmigen Körper (95) zu drehen.

17. Lebensmittelmühle nach Anspruch 16, dadurch gekennzeichnet, daß der erste Adapter (113) und der zweite Adapter (96) aus Kunststoff, und der röhrenförmige Körper (95) und der Hauptteil (93) aus Holz bestehen.

18. Lebensmittelmühle nach Anspruch 16, dadurch gekennzeichnet, daß die Verbindungsvorrichtung folgendes aufweist: (1) eine Kappe (18) auf der Patrone, die mit dem drehbaren Bauteil (20) zur gemeinsamen Drehung verbunden ist, (2) den Zweiten Adapter (113), (3) eine Vorrichtung, die eine Aussparung an einer Kappe (18) und dem zweiten Adapter (96) definiert, und (4) eine Vorrichtung, die einen Vorsprung (127) am anderen Ende der Kappe (18) und dem zweiten Adapter (113), der in der Aussparung aufgenommen wird, definiert.

19. Lebensmittelmühle nach Anspruch 18, dadurch gekennzeichnet, daß die Aussparung eine Vertiefung und der Vorsprung (127) einen Steg aufweist, der sich in der Vertiefung (26) nur durch ein Gleiten in Längsrichtung der Vertiefung bewegen kann.

20. Lebensmittelmühle nach Anspruch 19, dadurch gekennzeichnet, daß die Vertiefung (26) und der Vorsprung (127) schwalbenschwanzförmig sind.

21. Lebensmittelmühle nach Anspruch 1, dadurch gekennzeichnet, daß
das Gehäuse einen röhrenförmigen Körper (95), der die Patrone (14) umgibt, und einen Griffbereich (90) aufweist, der in bezug auf den röhrenförmigen Körper drehbar ist;
der Griffbereich (90) einen Hauptteil (93) und einen Adapter (113) besitzt, der an diesem Hauptteil angebracht ist, wobei der Adapter aus anderem Material besteht als der Hauptteil;
der Adapter (113) und das drehbare Bauteil (20) Vorrichtungen besitzen, um das drehbare Bauteil mit dem Griffbereich (90) zur gemeinsamen Drehung zu verbinden.

22. Lebensmittelmühle nach Anspruch 21, dadurch gekennzeichnet, daß der Adapter (113) aus Kunststoff und der Hauptteil (93) aus Holz besteht.

23. Lebensmittelmühle nach Anspruch 21, dadurch gekennzeichnet, daß die Verbindungsvorrichtung den Adapter (113), eine Kappe (18), die zur Drehung mit dem drehbaren Bauteil (20) verbunden wird, Vorrichtungen (126, 127), die eine Aussparung (26) an einer Kappe und dem einem Adapter festlegen, und einen Vorsprung (127) aufweist, der an der anderen Kappe und dem anderen Adapter ausgebildet ist und in die Aussparung paßt.

24. Lebensmittelmühle nach Anspruch 23, dadurch gekennzeichnet, daß die Ausparung eine Vertiefung (26) und der Vorsprung einen Steg (127) aufweist, wobei die Vertiefung und der Steg so geformt sind, daß der Steg in der Vertiefung nur durch Gleiten in Längsrichtung der Vertiefung beweglich ist.

25. Lebensmittelmühle nach Anspruch 24, dadurch gekennzeichnet, daß die Vertiefung (26) und der Steg (127) schwalbenschwanzförmig sind.

## Revendications

1. Moulin pour broyer des produits alimentaires, comprenant :
un carter (12,92);
une cartouche (14) montée dans ledit carter, ladite cartouche étant adaptée pour retenir un certain volume d'un produit alimentaire (24) qui doit être broyé et distribué;
un moyen pour limiter le déplacement de ladite cartouche par rapport audit carter;
des éléments (22) situés dans ladite cartouche pour broyer les denrées alimentaires; et
un moyen (46,93) pour faire fonctionner lesdits éléments de broyage,
caractérisé en ce que :
ladite cartouche (14) est jetable et peut être retirée dudit carter (12),
ladite cartouche (14) comporte un corps (16) et un capuchon (18) monté rotatif par rapport audit corps (16) et raccordé de façon opérationnelle auxdits éléments de broyage (22) par l'intermédiaire d'une arbre (20),
et ledit moyen d'actionnement (46,93) est connecté de façon amovible auxdits éléments de broyage (22) par l'intermédiaire d'une rainure (26), définie dans le capuchon (18) de ladite cartouche (14), et d'une barrette (36) qui s'étend vers le bas à partir d'une tige dudit moyen d'actionnement (46,93) et est logée dans la rainure (26).

2. Moulin pour broyer des produits alimentaires selon la revendication 1, dans lequel ladite rainure (26) présente un fond, une partie supérieure ouverte, au moins une extrémité ouverte, et des côtés qui convergent depuis ledit fond en direction de ladite partie supérieure, et ladite barrette (36) comporte des côtés divergents qui sont complémentaires des côtés convergents de la rainure (26), ladite barrette pouvant pénétrer par glissement dans ladite rainure et étant immobilisée contre tout déplacement par rapport audit capuchon (18) de la cartouche (14) dans une direction transversale à la direction de glissement.

3. Moulin pour broyer des denrées alimentaires selon la revendication 2, dans lequel ladite rainure (26) et ladite barrette (36) ont une forme en queue d'aronde en coupe transversale.

4. Moulin pour broyer des denrées alimentaires selon la revendication 2, caractérisé en outre par un moyen pour verrouiller ladite barrette (36) dans ladite rainure (26).

5. Moulin pour broyer des denrées alimentaires selon la revendication 2, dans lequel une partie dudit carter (12), c'est-à-dire la surface de fond d'une encoche (54), ferme l'extrémité ouverte de ladite rainure (26).

6. Moulin pour broyer des denrées alimentaires selon la revendication 5, dans lequel ladite encoche (54) est prévue dans un rebord situé sur une extrémité dudit carter (12) au voisinage dudit capuchon (18) de la cartouche (14), ladite encoche (54) comprenant un fond possédant une largeur supérieure à la largeur de ladite barrette (36), et des moyens permettant un déplacement limité du fond de ladite encoche (54) par rapport à ladite rainure (26) entre une première position, dans laquelle le fond de ladite encoche est situé au-dessus du fond de ladite rainure, et une seconde position dans laquelle le fond de ladite encoche est de niveau avec le fond de ladite rainure.

7. Moulin pour broyer des denrées alimentaires selon la revendication 5, dans lequel une fente (30) est ménagée dans ledit carter à une extrémité de ce dernier qui est distale par rapport audit capuchon (18) de la cartouche (14), ladite fente (30) ayant une extrémité ouverte au niveau de ladite extrémité du carter dudit corps (16), et une extrémité fermée à l'opposé de ladite extrémité ouverte, au moins un élément (28) faisant saillie radialement à partir dudit corps (16) et étant positionné dans ladite fente (30), et lesdits moyens permettant un déplacement limité comprennent un jeu entre l'extrémité fermée de ladite fente (30) et une surface adjacente dudit élément faisant saillie radialement (28).

8. Moulin pour broyer des denrées alimentaires selon la revendication 7, dans lequel ladite encoche est alignée avec ladite fente ménagée dans ledit corps du carter dans une direction axiale par rapport à ce corps, ledit moulin comprennent en outre un premier repère d'index situé sur le corps (16) de ladite cartouche (14) à une extrémité du corps (16) adjacente au capuchon (18) de ladite cartouche, ledit repère d'index étant aligné avec ledit élément faisant saillie radialement dans une direction axiale par rapport à ladite cartouche, et un second repère d'index sur le capuchon (18) de ladite cartouche en alignement avec une extrémité ouverte de ladite rainure (26) dans une direction axiale par rapport à ladite cartouche, l'alignement dudit premier repère d'index sur ledit second repère d'index conduisant à l'alignement de ladite rainure (26) avec ladite encoche (54).

9. Moulin pour broyer des denrées alimentaires selon la revendication 1, comprenant en outre un bouton (46) raccordé à ladite barrette (36).

10. Moulin pour broyer des denrées alimentaires selon la revendication 9, dans lequel ladite barrette comprend un rebord saillant (38) et au moins une nervure (40) définie axialement sur ledit rebord saillant, ledit bouton (46) comprend une jupe descendante (44) qui définit au moins une fente (42), la nervure (40) située dans ledit rebord saillant (38) étant positionnée dans la fente (42) sur ladite jupe descendante (44), ce qui a pour effet que ladite barrette (36) tourne lorsqu'on fait tourner ledit bouton (46).

11. Moulin pour broyer des denrées alimentaires selon la revendication 9, comportant en outre un élément d'extension allongé (58) positionné entre ladite barrette (36) et ledit bouton (46).

12. Moulin pour broyer des produits alimentaires selon la revendication 10, comprenant en outre un élément d'extension allongé (58) positionné entre ladite barrette (36) et ledit bouton (46), ledit élément d'extension comprenant une jupe descendante (64) définissant au moins une fente (66) engrenant avec la nervure (40) située dans ledit rebord saillant (38), ledit élément d'extension comprenant également un rebord et au moins une nervure (62) définie axialement dans ledit rebord dudit élément d'extension et s'engageant dans la fente ménagée dans la jupe descendante (44) du bouton (46), ce qui a pour effet que ladite barrette (36) tourne lorsqu'on fait ledit bouton (46).

13. Moulin pour broyer des produits alimentaires selon la revendication 1, dans lequel ledit capuchon (18) de la cartouche (14) comprend un élément de base (70) présentant une surface et au moins une rainure (72) définie dans ladite surface, et un élément adaptateur (76) monté sur ledit élément de base (70) et possédant au moins une patte (74) qui pénètre dans ladite rainure (72) dudit élément de base (70), ledit élément adaptateur (76) comprenant en outre une rainure ou fente (78) définie dans une surface située sur un côté dudit élément adaptateur opposé à ladite patte (78), et ladite tige comprend une barrette descendante (36), ladite barrette étant positionnée dans la rainure dudit élément adaptateur.

14. Broyeur pour produits alimentaires selon la revendication 1, dans lequel :
ledit carter comprend un corps tubulaire (95) entourant ladite cartouche et une section formant poignée (90), pouvant tourner par rapport audit corps tubulaire (95), ladite cartouche et ladite section formant poignée comportant un moyen pour raccorder ladite section formant poignée à un élément rotatif pour faire tourner ce dernier à l'aide de ladite section formant poignée par rapport à ladite section tubulaire;
un premier adaptateur (113) est réalisé en un matériau différent de celui dudit corps tubulaire (95) et est monté dans une extrémité dudit corps tubulaire (95), ledit premier adaptateur (113) définissant des fentes (117) dans une extrémité dudit corps tubulaire (95); et
le récipient servant à loger le produit alimentaire à broyer comporte des pattes disposées dans lesdites fentes pour empêcher la rotation dudit récipient par rapport à ladite section tubulaire.

15. Moulin pour broyer des produits alimentaires selon la revendication 14, dans lequel ledit adaptateur (113) est formé d'une matière plastique et ledit corps tubulaire (95) est réalisé en bois.

16. Moulin pour broyer des produits alimentaires selon la revendication 14, dans lequel ladite section formant poignée (90) comprend une partie principale (93) et un second adaptateur (96) situé sur ladite partie principale et formé d'un matériau différent de celui de ladite partie principale, ledit second adaptateur (96) et ledit élément rotatif (20) possédant un moyen pour accoupler ledit élément rotatif de manière qu'il tourne avec ladite section formant poignée (90) par rapport à ladite section tubulaire (95).

17. Moulin pour broyer des produits alimentaires selon la revendication 16, dans lequel ledit premier adaptateur (113) et ledit second adaptateur (96) sont formés d'une matière plastique et ladite section tubulaire (95) et ladite partie principale (93) sont réalisées en bois.

18. Moulin pour broyer des produits alimentaires selon la revendication 16, dans lequel lesdits moyens de couplage comprennent :
1) un capuchon (18) situé sur ladite cartouche et raccordé audit élément rotatif (20) pour tourner avec ce dernier,
2) ledit second adaptateur (113),
3) un moyen définissant un renfoncement dans ledit capuchon (18) ou ledit second adaptateur (96),
et
4) des moyens définissant une saillie (127) située sur l'autre extrémité dudit capuchon (18) et sur ledit second adaptateur (113) et logée dans ledit renfoncement.

19. Moulin pour broyer des produits alimentaires selon la revendication 18, dans lequel ledit renfoncement comprend une rainure et ladite saillie (127) comprend une barrette qui peut se déplacer dans ladite rainure (26) uniquement en glissant longitudinalement dans cette dernière.

20. Moulin pour broyer des produits alimentaires selon la revendication 19, dans lequel ladite rainure (26) et ladite barrette (127) ont une forme en queue d'aronde.

21. Moulin pour broyer des produits alimentaires selon la revendication 20, dans lequel :
ledit carter comprend une section tubulaire (95) entourant ladite cartouche (14) et une section formant poignée (97) pouvant tourner par rapport à ladite section tubulaire;
ladite section formant poignée (90) comporte une partie principale (93) et un adaptateur (113) monté sur ladite partie principale, ledit adaptateur étant réalisé en un matériau différent de celui de ladite partie principale;
ledit adaptateur (113) et ledit élément rotatif (20) possèdent des moyens pour accoupler ledit élément rotatif à ladite section formant poignée (90) de façon à ce qu'il tourne avec cette dernière.

22. Moulin pour broyer des produits alimentaires selon la revendication 21, dans lequel ledit adaptateur (113) est réalisé en une matière plastique et ladite partie principale (93) est réalisée en bois.

23. Moulin pour broyer des produits alimentaires selon la revendication 21, dans lequel ledit moyen d'accouplement comprend ledit adaptateur (113), un capuchon (18) connecté pour pouvoir tourner avec ledit élément rotatif (20), un moyen (26,127) définissant un renfoncement (26) dans ledit capuchon ou ledit adaptateur, une partie saillante (127) formée sur l'autre de ces éléments et pénétrant dans ledit renfoncement.

24. Moulin pour broyer des produits alimentaires selon la revendication 23, dans lequel ledit renfoncement comprend une rainure (26) et ladite partie saillante comprend une barrette (127), ladite rainure et ladite barrette étant conformées de sorte que ladite barrette est déplaçable dans ladite rainure uniquement en y glissant longitudinalement.

25. Moulin pour broyer des produits alimentaires selon la revendication 24, dans lequel ladite rainure (26) et ladite barrette (127) ont une forme en queue d'aronde.
